# EUROPÄISCHE PATENTSCHRIFT

(11) **EP 3 081 836 B1**
(45) Veröffentlichungstag und Bekanntmachung des Hinweises auf die Patenterteilung: **03.07.2019**
(21) Anmeldenummer: 16165007.2
(22) Anmeldetag: 13.04.2016
(51) Int. Cl.: F16J 15/3224

(54) **ABSTREIFER**
SCRAPER
DEMOULEUR

(30) Priorität: 15.04.2015 DE 102015105737
(43) Veröffentlichungstag der Anmeldung: 19.10.2016
(73) Patentinhaber: Carl Freudenberg KG, 69469 Weinheim (DE)
(72) Erfinder: Günther, Hans-Werner, 31623 Drakenburg (DE); Müller-Niehuus, Dr. Kristian, 60438 Frankfurt (DE)

(56) Entgegenhaltungen:
- EP-A1- 0 104 504
- EP-A1- 1 818 579
- EP-B1- 1 266 157
- WO-A1-2016/104164
- WO-A2-2007/061575
- CH-A- 446 835
- CN-Y- 2 141 852
- DE-U1- 29 706 270
- US-A- 4 102 538
- US-A1- 2009 152 779

## Beschreibung

Die Erfindung betrifft einen Abstreifer für die Dichtungsanordnung einer Zylinderanordnung mit einem Zylinder und einer Kolbenstange, umfassend eine in Richtung des abzudichtenden Raums weisende Stützlippe und eine in Richtung der Umgebung weisende Abstreiferlippe sowie einen Haltekörper, von welchem die Stützlippe und die Abstreiferlippe abragen.

Zylinderanordnungen bestehend aus einem Zylinder und einer Kolbenstange, insbesondere im Fall einer Hydraulikzylinderanordnung mit einem Hydraulikzylinder werden vielfältig zur translatorischen Kraftübertragung eingesetzt. Derartige Zylinderanordnungen werden gegenüber der Umgebung mit einer meist mehrteiligen Dichtungsanordnung abgedichtet. Ein Teil der Dichtungsanordnung ist dabei ein Abstreifer, der die Dichtungsanordnung in Richtung der Umgebung abschließt. Aufgabe des Abstreifers ist es, Schmutz, Fremdpartikel und Feuchtigkeit von der in den Hydraulikzylinder hineinfahrenden Kolbenstange abzustreifen. Dadurch kann verhindert werden, dass Feuchtigkeit oder Verschmutzungen in die Dichtungsanordnung gelangen und dort zu vorzeitigem Verschleiß führen können.

Dabei kann der Abstreifer einfach- oder doppeltwirkend ausgebildet sein. Ein einfach wirkender Abstreifer weist lediglich eine in Richtung der Umgebung weisende Abstreiferlippe auf. Diese hält Verunreinigungen von außen fern und verhindert, dass diese in die Dichtungsanordnung gelangen. Doppeltwirkende Abstreifer weisen eine in Richtung der Umgebung weisende Abstreiferlippe und eine in Richtung des abzudichtenden Raums weisende Stützlippe auf. Die Stützlippe bewirkt einerseits eine Verbesserung der Kippstabilität des in eine Nut des Hydraulikzylinders montierten Abstreifers. Andererseits unterstützt die Stützlippe die Funktion der Dichtungsanordnung, da die Stützlippe Reste durch die Dichtungsanordnung hindurchgetretener Hydraulikflüssigkeit abstreift und im Inneren der Dichtungsanordnung hält. Ein derartig doppelt wirkender Abstreifer ist beispielsweise aus der EP 1 266 157 B1 und der US 2009/0152779 A1 bekannt.

Auch die EP 1 818 579 A1 zeigt einen doppelt wirkenden Abstreifer. Die Abstreiferlippe ist mit einer ellipsenförmigen Kontur versehen.

US 4,102,538 und WO 2007/061575 A2 zeigen verschiedene Ausgestaltungen von Lippendichtungen.

Wie bereits ausgeführt ist der Abstreifer in einer Nut des Hydraulikzylinders angeordnet, wobei die Abstreiferlippe und die Stützlippe mit radialer Vorspannung an der Kolbenstange anliegen. Bei radialer Auslenkung der Kolbenstange durch Einwirken von Querkräften verändert sich jedoch der Einbauraum des Abstreifers, insbesondere der Spalt zwischen Zylinder und Kolbenstange. Der Spalt wird an der ausgelenkten Seite der Kolbenstange kleiner und an der belasteten Seite der Kolbenstange größer. Die aus dem Stand der Technik bekannten Abstreifer sind jedoch lediglich in der Lage, diese Auslenkung nur im Bereich weniger Zehntelmillimeter auszugleichen. Bei größeren Auslenkungen liegt die Abstreiferlippe nicht mehr vollumfänglich an der Kolbenstange an bzw. sie wird so stark deformiert, dass ein vollumfängliches Abstreifen von Verschmutzungen nicht mehr möglich ist.

Werden zur Lösung dieses Problems die Abstreifer aus einem weicheren Material hergestellt, um größere Auslenkungen der Kolbenstangen ausgleichen zu können, müssen die Lippen des Abstreifers bei großer Länge verhältnismäßig dick ausgeführt werden, um einen Kontakt der Abstreiferlippe mit der Kolbenstange gewährleisten zu können. Dies führt bei kleinen zur Verfügung stehenden Einbauräumen zu starken Deformationen der Abstreiferlippe mit breiten Kontaktbereichen zur Kolbenstange. Daraus ergeben sich hohe Kontaktkräfte und eine unerwünscht hohe Reibung.

Der Erfindung liegt die Aufgabe zugrunde, einen Abstreifer für die Dichtungsanordnung einer Zylinderanordnung bereitzustellen, welche auch bei größeren Auslenkungen der Kolbenstange Verschmutzungen zuverlässig abstreift.

Diese Aufgabe wird mit den Merkmalen von Anspruch 1 gelöst. Auf vorteilhafte Ausgestaltungen nehmen die Unteransprüche Bezug.

Zur Lösung der Aufgabe ist die Abstreiferlippe an ihrem freien Ende in Richtung auf die Stange abgebogen. Dadurch bildet die Abstreiferlippe vor der Kontaktzone mit der Kolbenstange noch eine Kröpfung aus, die im nicht montierten Zustand in der Radialebene verläuft. Dadurch kann gewährleistet werden, dass der Kontaktpunkt der Abstreiferlippe an der Kolbenstange stets im Bereich des freien Endes der Abstreiferlippe liegt. Die gesamte Länge der Abstreiferlippe kann genutzt werden, um Exzentrizitäten bzw. Lageveränderungen der Kolbenstange relativ zu dem Zylinder ausgleichen zu können und eine stets gleichbleibende Abstreiferleistung zu gewährleisten. Dadurch, dass die Abstreiferlippe an ihrem freien Ende in Richtung auf die Stange abgebogen ist, kann die Abstreiferlippe relativ lang und dünn ausgeführt werden. Es ist stets gewährleistet, dass die Abstreiferlippe im Bereich ihres freien Endes an der Kolbenstange anliegt. Insbesondere kann bei der erfindungsgemäßen Ausgestaltung verhindert werden, dass die Abstreiferlippe bei Durchbiegung einen unerwünschten Kontaktbereich beispielsweise in der Mitte der Abstreiferlippe hat.

Die Stützlippe hat die Funktion, das Kippmoment der Abstreiferlippe auszugleichen und den Haltekörper im Einbauraum zu stabilisieren. Dazu erzeugt die Stützlippe ein Gegenmoment und hält das Hydraulikmedium beim Ausfahren der Kolbenstange im Dichtungsraum. Dabei kann die Stützlippe aber so ausgebildet sein, dass die Funktion der Stützlippe nicht im vollen Bereich der für die Abstreiferlippe zulässigen radialen Auslenkung gegeben ist. Dadurch kann die Stützlippe relativ kurz ausgebildet sein. Ansonsten ergeben sich nachteilige Auswirkungen insbesondere hinsichtlich der Dimension des Abstreifers.

Die Kontaktfläche der Abstreiferlippe zur Kolbenstange ist unabhängig von der Exzentrizität der Kolbenstange mit wenigen Zehntelmillimetern sehr gering. Dadurch ergibt sich eine hohe Kontaktpressung im Bereich einer sehr schmalen Kontaktzone, Dadurch ergibt sich eine gute Abstreiferwirkung bei geringen Reibungskräften. Dadurch ist es möglich, einen doppeltwirkenden Abstreifer mit einer Abstreiferlippe und einer Stützlippe in kleinen Einbauräumen zu integrieren, wobei die Abstreiferlippe eine große Auslenkung der Kolbenstange kompensieren kann und dabei nur eine sehr schmale Kontaktzone zur Kolbenstange entwickelt. Im Bereich der Kontaktzone ist die Anpressung der Abstreiferlippe hoch, so dass bei gleichzeitig geringer Reibung eine gute Abstreiferwirkung erzielt wird.

Das Verhältnis der Länge zu der mittleren Dicke der Abstreiferlippe ist erfindungsgemäß größer als 5. Dadurch ist die Abstreiferlippe im Vergleich zu den aus dem Stand der Technik bekannten Abstreifern lang und dünn ausgeführt. Hierbei ist vorteilhaft, dass die Abstreiferlippe dadurch eine hohe Exzentrizität überbrücken kann und immer ein Kontakt zur Kolbenstange gewährleistet ist. Dadurch, dass die Abstreiferlippe an ihrem freien Ende in Richtung auf die Stange abgebogen ist, ist aber stets gewährleistet, dass sich die Abstreiferlippe nicht durchbiegt und schon vor dem gewünschten Kontaktpunkt an der Kolbenstange anliegt. Ein besonders gutes Ausgleichsvermögen für Exzentrizität bei gleichbleibend guter Abstreiferleistung ergibt sich, wenn das Verhältnis von Länge zu Dicke der Abstreiferlippe zwischen 7 und 8 beträgt.

Vorzugsweise ist der Abstreifer aus Polyurethan (PU) ausgebildet. Polyurethan ist beständig gegenüber Hydraulikflüssigkeiten und weist bei hoher Verschleißfestigkeit ein günstiges Reibverhalten auf. Alternativ ist es aber auch denkbar, den Abstreifer aus einem Elastomer, aus Polyethylen (PE) oder aus Polyamid (PA) auszubilden.

Der Haltekörper kann alternativ aus einem anderen Werkstoff bestehen als die Abstreiferlippe und die Stützlippe. Bei dieser Ausgestaltung ist der Abstreifer zwar einstückig aber aus mehreren Werkstoffen hergestellt. In einer weiteren alternativen Ausgestaltung können Haltekörper, Abstreiferlippe und Stützlippe mehrteilig ausgeführt sein.

Der Abstreifer ist vorzugsweise aus einem Werkstoff mit einer Härte von größer als 95 Shore A, vorzugsweise mit einer von Härte 98 Shore A ausgebildet. Dadurch besteht der Abstreifer im Vergleich zu den aus dem Stand der Technik bekannten Abstreifern aus einem vergleichsweise harten Werkstoff. Dies bewirkt, dass die lang und schmal ausgebildete Abstreiferlippe nur eine geringe Durchbiegung aufweist, wobei die Abstreiferlippe aufgrund ihrer Geometrie dennoch in der Lage ist, auch größere Auslenkungen der Kolbenstange auszugleichen. Aufgrund der hohen Härte, kann aber vermieden werden, dass sich die dünn ausgebildete Abstreiferlippe durchbiegt und dadurch unerwünschte Kontaktbereiche entstehen.

Der Haltekörper kann zwischen Stützlippe und Abstreiferlippe eine Entlastungsnut aufweisen. Dadurch ergibt sich eine verbesserte funktionelle Trennung zwischen Abstreiferlippe und Stützlippe, so dass beispielsweise die Weichheit beider Lippen gesondert voneinander eingestellt werden kann. Insgesamt werden die Abstreiferlippe und die Stützlippe durch die Entlastungsnut weicher, wodurch sich die Kontaktkraft zur Kolbenstange verringert.

Aus dem Haltekörper kann eine Druckentlastungslippe ausgebildet sein, welche sich in Richtung der Umgebung erstreckt und dessen freies Ende sich am Zylinder abstützt. Eine Funktion der Druckentlastungslippe ist es, die Abdichtung des Abstreifers zu verbessern und zusätzlich durch Aufnahme des Kippmomentes den Haltekörper im Einbauraum zu stabilisieren.

In den Haltekörper kann eine Durchbrechung eingebracht sein, welche sich von der dem Inneren der Zylinderanordnung zugewandten Fläche zu der in Richtung der Umgebung zugewandten Fläche des Haltekörpers erstreckt. Dadurch ist ein Durchgang von dem Dichtungsraum zur Umgebung geschaffen. Im Zusammenspiel mit der Druckentlastungslippe ergibt sich so die Funktion eines Überdruckventils. Die Druckentlastungslippe liegt mit Vorspannung an dem Gehäuse des Zylinders an. Sobald der Druck in dem Raum zwischen Dichtungsanordnung und Abstreifer einen vorgegebenen Wert überschreitet, wird die Druckentlastungslippe zum Ausgleich des Überdrucks abgehoben, so dass überschüssiges Medium entweichen kann. Hierbei ist stets gewährleistet, dass die Abstreiferlippe an der Kolbenstange anliegt und dort ihre Funktion erfüllt. Ein Ausgleich des Überdruckes, welcher zum unerwünschten Abheben der Abstreiferlippe führen würde, erfolgt bei dieser Ausgestaltung über die Druckentlastungslippe. Die Durchbrechung kann in Form einer Bohrung ausgeführt sein.

Der Haltekörper kann auf der der Kolbenstange abgewandten Seite umlaufende Vorsprünge aufweisen. Diese Vorsprünge können in Form einer umlaufenden Wulst ausgebildet sein. Vorzugsweise sind zwei umlaufende Vorsprünge vorgesehen. Dadurch ergeben sich zwei definierte kurze Kontaktlinien im Einbauraum. Durch die so erhöhte Pressung wird eine sichere Dichtheit erzielt.

Die Abstreiferlippe kann an ihrem freien Ende spitz zulaufen. Dazu kann die Abstreiferlippe an ihrem freien Ende dreieckig ausgebildet sein. Hierbei ist vorteilhaft, dass eine linienförmige Anlage mit hoher Flächenpressung gewährleistet ist. Daraus ergibt eine gute Abstreiferwirkung bei geringer Reibung.

Einige Ausgestaltungen des erfindungsgemäßen Abstreifers werden nachfolgend anhand der Figuren näher erläutert. Diese zeigen, jeweils schematisch:
- Fig. 1: Einen Abstreifer im Schnitt;
- Fig. 2: einen Abstreifer mit Druckentlastungslippe und Durchbrechung im Schnitt.

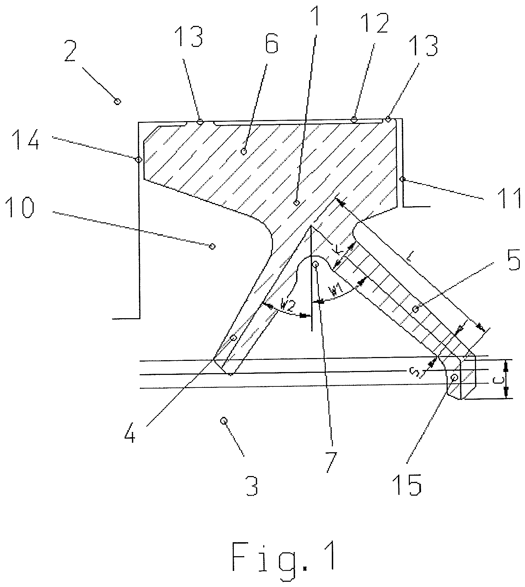

Figur 1 zeigt einen Abstreifer 1 für die Dichtungsanordnung einer Zylinderanordnung mit einem Zylinder 2 und einer Kolbenstange 3. In dieser Ausgestaltung ist die Zylinderanordnung eine Hydraulikzylinderanordnung mit einem Hydraulikzylinder und einer Kolbenstange 3. Der Abstreifer 1 bildet dabei den Abschluss der Dichtungsanordnung in Richtung der Umgebung 11. Der Abstreifer 1 ist in einer Nut 14 des Zylinders 2 angeordnet und liegt mit radialer Vorspannung linienförmig entlang einer geschlossenen Linie an der Kolbenstange 3 an.

Der Abstreifer 1 umfasst eine in Richtung des abzudichtenden Raums weisende Stützlippe 4 und eine in Richtung der Umgebung weisende Abstreiferlippe 5. Die Stützlippe 4 und die Abstreiferlippe 5 sind an einem Haltekörper 6 angeordnet, wobei die Stützlippe 4 in Richtung des abzudichtenden Raums und die Abstreiferlippe 5 in Richtung der Umgebung von dem Haltekörper 6 abragt.

Die Abstreiferlippe 5 ist an ihrem freien Ende in Richtung auf die Kolbenstange 3 abgebogen. Dabei bildet die Abstreiferlippe 5 vor der Kontaktzone mit der Kolbenstange 3 eine Kröpfung aus, die im nicht montierten Zustand vorzugsweise in der Radialebene des Abstreifers 1 verläuft. Hierbei ist die Kröpfung aus der Abstreiferlippe 5 vorzugsweise um einen Winkel von 115° bis 150° in Richtung der Radialebene abgebogen. Dabei ergibt sich bei einem Winkel W1 von 30° zwischen Kröpfung und Abstreiferlippe 5 ein Winkel von 130° und entsprechend bei einem Winkel W1 von 65° ein Winkel von 115°.

Alternativ ist es auch denkbar, dass die Abstreiferlippe 5 an ihrem freien Ende eine in Richtung auf die Kolbenstange 3 weisende Verdickung aufweist. Insgesamt wird durch diese Ausgestaltung gewährleistet, dass die Abstreiferlippe 5 im Bereich des freien Endes an der Kolbenstange 3 anliegt. Die Abstreiferlippe 5 kann an ihrem freien Ende spitz zulaufen, so dass sich eine linienförmige Anlagefläche an der Kolbenstange 3 ergibt.

Der Abstreifer 1 besteht aus Polyurethan und ist einstückig ausgebildet. Das Material ist so gewählt, dass sich eine Härte von 98 Shore A ergibt.

Das Verhältnis von der Länge L zu der mittleren Dicke der Abstreiferlippe 5 beträgt bei dieser Ausgestaltung 7 zu 1. Im unbelasteten Zustand ist die Abstreiferlippe 5 ausgehend von der Radialebene um einen Winkel von 48° abgebogen. Die vorteilhafte Wirkung der Abstreiferlippe 5 ergibt sich, wenn der Winkel W1 zwischen 30° und 65° liegt. Die Stützlippe 4 ist ausgehend von der Radialebene um einen Winkel W2 von 33° abgebogen. Die vorteilhafte Wirkung ergibt sich hier, wenn der Winkel W2 zwischen 30° und 65° beträgt. Die Abstreiferlippe 5 ist darüber hinaus so ausgebildet, dass die Dicke S an dem freien Ende der Abstreiferlippe 5 kleiner ist als die Anfangsdicke K der Abstreiferlippe 5 im Bereich des Haltekörpers 6. Vorzugsweise beträgt das Verhältnis der Dicke K zu der Dicke S 1,1 bis 1,2. Alternativ kann die Dicke S auch gleich der Dicke K sein. Die mittlere Dicke der Abstreiferlippe 5 wird gebildet aus dem arithmetischen Mittel der Dicke S und der Dicke K.

Dadurch, dass die Abstreiferlippe 5 an ihrem freien Ende in Richtung auf die Kolbenstange 3 abgebogen ist, ergibt sich ein im unbelasteten Zustand in Richtung der Radialebene weisender Abschnitt 15. Das Verhältnis von der Länge L der Abstreiferlippe 5 zu der Länge C des Abschnitts 15 beträgt in dieser Ausgestaltung 5. Erfindungsgemäß liegt das Verhältnis L:C zwischen 4:1 und 15:1.

Der Haltekörper 6 weist zwischen Stützlippe 4 und Abstreiferlippe 5 eine Entlastungsnut 7 auf.

Der Haltekörper 6 ist auf der den Lippen abgewandten Seite 12 mit zwei umlaufenden Vorsprüngen 13 versehen, welche in Form einer Wulst ausgebildet sind. Der Haltekörper 6 stützt sich über die Vorsprünge 13 in der Nut 14 des Zylinders 2 ab.

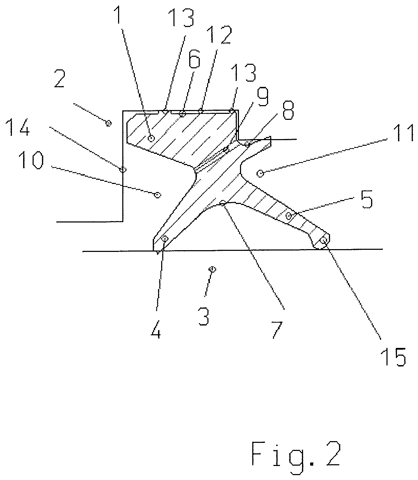

Figur 2 zeigt einen Abstreifer gemäß Figur 1, wobei sich bei dieser Ausgestaltung zusätzlich aus dem Haltekörper 6 eine Druckentlastungslippe 8 erstreckt, dessen freies Ende sich an dem Zylinder 2 abstützt. Des Weiteren ist in den Haltekörper 6 eine Durchbrechung 9 in Form einer Bohrung eingebracht, welche eine Verbindung der der Dichtungsanordnung zugewandten Seite 10 mit der der Umgebung zugewandten Seite 11 bewirkt. Dadurch, dass die Druckentlastungslippe 8 an dem Zylinder 2 anliegt, erfolgt ein Mediumaustausch aber nur dann, wenn der Druck in dem Dichtungsraum ein vorgegebenes Maß überschreitet und dadurch die Druckentlastungslippe 8 von dem Zylinder 2 abhebt.

## Patentansprüche

1. Abstreifer (1) für die Dichtungsanordnung einer Zylinderanordnung mit einem Zylinder (2) und einer Kolbenstange (3), umfassend eine in Richtung des abzudichtenden Raums weisende Stützlippe (4) und eine in Richtung der Umgebung weisende Abstreiferlippe (5) sowie einen Haltekörper (6), von welchem die Stützlippe (4) und die Abstreiferlippe (5) abragen, wobei die Abstreiferlippe (5) an ihrem freien Ende in Richtung auf die Kolbenstange (3) abgebogen ist, **dadurch gekennzeichnet, dass** sich im unbelasteten Zustand ein in Richtung der Radialebene weisender Abschnitt (15) ergibt und dass das Verhältnis von der Länge (L) der Abstreiferlippe (5) zu der Länge (C) des Abschnitts (15) zwischen 4:1 und 15:1 beträgt, wobei aus dem freien Ende der Abstreiferlippe (5) eine Kröpfung ausgebildet ist und wobei das Verhältnis der Länge (L) zu der mittleren Dicke der Abstreiferlippe (5) größer als 5 ist, wobei die Kröpfung im nicht montierten Zustand des Abstreifers (1) in einer Radialebene verläuft.

2. Abstreifer nach Anspruch 1, **dadurch gekennzeichnet, dass** die Abstreiferlippe (5) an ihrem freien Ende eine in Richtung auf die Kolbenstange (3) weisende Verdickung aufweist.

3. Abstreifer nach Anspruch 1 oder 2, **dadurch gekennzeichnet, dass** das Verhältnis von Länge (L) zu der mittleren Dicke der Abstreiferlippe (5) zwischen 7 und 8 beträgt.

4. Abstreifer nach einem der Ansprüche 1 bis 3, **dadurch gekennzeichnet, dass** der Abstreifer (1) aus Polyurethan ausgebildet ist.

5. Abstreifer nach einem der Ansprüche 1 bis 4, **dadurch gekennzeichnet, dass** die Härte des Werkstoffs des Abstreifers (1) größer als 95 Shore A, vorzugsweise 98 Shore A ist.

6. Abstreifer nach einem der Ansprüche 1 bis 5, **dadurch gekennzeichnet, dass** der Haltekörper (6) zwischen Stützlippe (4) und Abstreiferlippe (5) eine Entlastungsnut (7) aufweist.

7. Abstreifer nach einem der Ansprüche 1 bis 6, **dadurch gekennzeichnet, dass** aus dem Haltekörper (6) eine Druckentlastungslippe (8) ausgebildet ist, dessen freies Ende sich an dem Zylinder (2) abstützt.

8. Abstreifer nach einem der Ansprüche 1 bis 7, **dadurch gekennzeichnet, dass** in den Haltekörper (6) eine Durchbrechung (9) eingebracht ist, welche eine Verbindung der der Dichtungsanordnung zugewandten Seite (10) mit der der Umgebung zugewandten Seite (11) des Haltekörpers (6) schafft.

9. Abstreifer nach einem der Ansprüche 1 bis 8, **dadurch gekennzeichnet, dass** der Haltekörper (6) auf der den Lippen abgewandten Seite (12) mit Vorsprüngen (13) versehen ist.

10. Abstreifer nach einem der Ansprüche 1 bis 9, **dadurch gekennzeichnet, dass** die Abstreiferlippe (5) linienförmig an der Kolbenstange (3) anliegt.

11. Abstreifer nach einem der Ansprüche 1 bis 10, **dadurch gekennzeichnet, dass** die Abstreiferlippe (5) an ihrem freien Ende spitz zuläuft.

12. Hydraulikzylinderanordnung, umfassend einen Hydraulikzylinder (2) und eine Kolbenstange (3), wobei zwischen Hydraulikzylinder (2) und Kolbenstange (3) eine Dichtungsanordnung angeordnet ist, wobei die Dichtungsanordnung einen Abstreifer (1) gemäß einem der vorherigen Ansprüche umfasst, wobei der Abstreifer (1) den Abschluss der Dichtungsanordnung in Richtung der Umgebung (11) bildet und wobei der Abstreifer (1) in einer Nut (14) des Zylinders (2) angeordnet ist und mit radialer Vorspannung entlang einer geschlossenen Linie an der Kolbenstange (3) anliegt.

## Claims

1. Scraper (1) for the seal arrangement of a cylinder arrangement having a cylinder (2) and a piston rod (3), comprising a supporting lip (4) which points in the direction of the space to be sealed, a scraper lip (5) which points in the direction of the surroundings, and a holding body (6), from which the supporting lip (4) and the scraper lip (5) protrude, the scraper lip (5) being bent away at its free end in the direction of the piston rod (3), **characterized in that**, in the unloaded state, a section (15) which points in the direction of the radial plane results, and **in that** the ratio of the length (L) of the scraper lip (5) to the length (C) of the section (15) is between 4:1 and 15:1, an offset being configured from the free end of the scraper lip (5), and the ratio of the length (L) to the mean thickness of the scraper lip (5) being greater than 5, the offset running in a radial plane in the non-mounted state of the scraper (1).

2. Scraper according to Claim 1, **characterized in that** the scraper lip (5) has, at its free end, a thickened portion which points in the direction of the piston rod (3).

3. Scraper according to Claim 1 or 2, **characterized in that** the ratio of the length (L) to the mean thickness of the scraper lip (5) is between 7 and 8.

4. Scraper according to one of Claims 1 to 3, **characterized in that** the scraper (1) is configured from polyurethane.

5. Scraper according to one of Claims 1 to 4, **characterized in that** the hardness of the material of the scraper (1) is greater than 95 Shore A, preferably 98 Shore A.

6. Scraper according to one of Claims 1 to 5, **characterized in that** the holding body (6) has a relief groove (7) between the supporting lip (4) and the scraper lip (5).

7. Scraper according to one of Claims 1 to 6, **characterized in that** a pressure relief lip (8) is configured from the holding body (6), the free end of which pressure relief lip (8) is supported on the cylinder (2).

8. Scraper according to one of Claims 1 to 7, **characterized in that** an aperture (9) is made in the holding body (6), which aperture (9) provides a connection of the side (10) which faces the seal arrangement to that side (11) of the holding body (6) which faces the surroundings.

9. Scraper according to one of Claims 1 to 8, **characterized in that** the holding body (6) is provided with projections (13) on the side (12) which faces away from the lips.

10. Scraper according to one of Claims 1 to 9, **characterized in that** the scraper lip (5) bears in a linear manner against the piston rod (3).

11. Scraper according to one of Claims 1 to 10, **characterized in that** the scraper lip (5) tapers acutely at its free end.

12. Hydraulic cylinder arrangement, comprising a hydraulic cylinder (2) and a piston rod (3), a seal arrangement being arranged between the hydraulic cylinder (2) and the piston rod (3), the seal arrangement comprising a scraper (1) according to one of the preceding claims, the scraper (1) forming the end of the seal arrangement in the direction of the surroundings (11), and the scraper (1) being arranged in a groove (14) of the cylinder (2) and bearing against the piston rod (3) with radial prestress along a closed line.

## Revendications

1. Racloir (1) pour l'agencement d'étanchéité d'un agencement de cylindre comprenant un cylindre (2) et une tige de piston (3), comprenant une lèvre de support (4) tournée dans la direction de l'espace à étanchéifier et une lèvre de racloir (5) tournée dans la direction de l'environnement, ainsi qu'un corps de retenue (6) depuis lequel font saillie la lèvre de support (4) et la lèvre de racloir (5), la lèvre de racloir (5) étant recourbée au niveau de son extrémité libre dans la direction de la tige de piston (3), **caractérisé en ce qu'**une portion (15) tournée dans la direction du plan radial est obtenue dans l'état non sollicité et **en ce que** le rapport de la longueur (L) de la lèvre de racloir (5) à la longueur (C) de la portion (15) est compris entre 4:1 et 15:1, un coude étant réalisé à partir de l'extrémité libre de la lèvre de racloir (5), et le rapport de la longueur (L) à l'épaisseur moyenne de la lèvre de racloir (5) étant supérieur à 5, le coude s'étendant dans un plan radial dans l'état non monté du racloir (1).

2. Racloir selon la revendication 1, **caractérisé en ce que** la lèvre de racloir (5) présente au niveau de son extrémité libre un épaississement tourné dans la direction de la tige de piston (3).

3. Racloir selon la revendication 1 ou 2, **caractérisé en ce que** le rapport de la longueur (L) à l'épaisseur moyenne de la lèvre de racloir (5) est compris entre 7 et 8.

4. Racloir selon l'une quelconque des revendications 1 à 3, **caractérisé en ce que** le racloir (1) est réalisé en polyuréthane.

5. Racloir selon l'une quelconque des revendications 1 à 4, **caractérisé en ce que** la dureté du matériau du racloir (1) est supérieure à 95 Shore A, de préférence à 98 Shore A.

6. Racloir selon l'une quelconque des revendications 1 à 5, **caractérisé en ce que** le corps de retenue (6) entre la lèvre de support (4) et la lèvre de racloir (5) présente une rainure de décharge de contrainte (7).

7. Racloir selon l'une quelconque des revendications 1 à 6, **caractérisé en ce qu'**une lèvre de détente de contrainte de pression (8) est réalisée à partir du corps de retenue (6), son extrémité libre s'appuyant contre le cylindre (2).

8. Racloir selon l'une quelconque des revendications 1 à 7, **caractérisé en ce qu'**un orifice (9) est pratiqué dans le corps de retenue (6), lequel crée une liaison du côté (10) tourné vers l'agencement d'étanchéité avec le côté (11) du corps de retenue (6) tourné vers l'environnement.

9. Racloir selon l'une quelconque des revendications 1 à 8, **caractérisé en ce que** le corps de retenue (6) est pourvu de saillies (13) sur le côté (12) opposé aux lèvres.

10. Racloir selon l'une quelconque des revendications 1 à 9, **caractérisé en ce que** la lèvre de racloir (5) s'applique sous forme linéaire contre la tige de piston (3).

11. Racloir selon l'une quelconque des revendications 1 à 10, **caractérisé en ce que** la lèvre de racloir (5) se termine en pointe à son extrémité libre.

12. Agencement de cylindre hydraulique comprenant un cylindre hydraulique (2) et une tige de piston (3), un agencement d'étanchéité étant disposé entre le cylindre hydraulique (2) et la tige de piston (3), l'agencement d'étanchéité comprenant un racloir (1) selon l'une quelconque des revendications précédentes, le racloir (1) formant la terminaison de l'agencement d'étanchéité dans la direction de l'environnement (11) et le racloir (1) étant disposé dans une rainure (14) du cylindre (2) et s'appliquant avec une précontrainte radiale le long d'une ligne fermée contre la tige de piston (3).
